# EUROPÄISCHE PATENTANMELDUNG

(11) **EP 2 477 320 A2**
(43) Veröffentlichungstag der Anmeldung: **18.07.2012**
(21) Anmeldenummer: 12151412.9
(22) Anmeldetag: 17.01.2012
(51) Int. Cl.: H02M 3/158

(54) **Wechselrichteranordnung**

(30) Priorität: 18.01.2011 DE 202011001610 U
(71) Anmelder: voltwerk electronics GmbH, 20537 Hamburg (DE)
(72) Erfinder: Lenz, Thomas, 61352 Bad Homburg (DE); Knaup, Peter, Dr., 64673 Zwingeberg (DE)
(74) Vertreter: Schöling, Ingo

(57) **Zusammenfassung**

Die Erfindung betrifft eine Transformationsvorrichtung (1) zum Transformieren eines Gleichstroms einer Gleichstromquelle (2) mit variierender Ausgangsleistung in einen Wechselstrom, mit
- einer Stromstelleranordnung (18) zum Transformieren einer ersten Gleichspannung (U1) am Ausgang der Gleichstromquelle (2) in eine zweite Gleichspannung (U2), und
- einem Wechselrichter (12) zum Transformieren der zweiten Gleichspannung (U2) in eine Wechselspannung,
- die Stromstelleranordnung (18) umfasst wenigstens 2 parallelgeschaltete Stromsteller (6), wobei jeder der Stromsteller (6) dazu vorbereitet ist, die erste Gleichspannung (U1) in die zweite Gleichspannung (U2) zu transformieren,
- die Transformationsvorrichtung (1) ist dazu vorbereitet, in Abhängigkeit der jeweils abgegebenen Ausgangsleistung der Stromquelle (2) alle Stromsteller (6) zugleich zu betreiben oder abwechselnd jeweils einen oder eine Gruppe der Stromsteller (6) für jeweils eine vorbestimmte Belastungszeit zu betreiben.

## Beschreibung

Die vorliegende Erfindung betrifft eine Transformationsanordnung zum Transformieren eines Gleichstroms in einen Wechselstrom sowie eine Solaranlage mit einer solchen Transformationsanordnung und ein Verfahren zum Betreiben einer Transformationsanordnung.

Transformationsanordnungen zum Transformieren eines Gleichstroms, der von einer Gleichstromquelle, wie beispielsweise einem Solargenerator erzeugt wird, in einen Wechselstrom zu transformieren, insbesondere um diesen in ein elektrisches Versorgungsnetz einzuspeisen, sind allgemein bekannt. Diese finden insbesondere für Solargeneratoren, also eine Verschaltung diverser Photovoltaikzellen, Anwendung, weil Photovoltaikzellen prinzipbedingt einen Gleichstrom und keinen Wechselstrom erzeugen. Es können aber auch andere Gleichstromquellen grundsätzlich in Betracht kommen.

Üblicherweise wird hierbei ein Wechselrichter verwendet, der über ein pulsweitenmoduliertes Verfahren aus einer Gleichspannung in einem Gleichspannungszwischenkreis eine Wechselspannung an seinem Ausgang erzeugt. Um in dem Gleichspannungszwischenkreis, in dem üblicherweise eine sehr große Kapazität parallel geschaltet ist, eine möglichst stabile Gleichspannung zu gewährleisten, ist zwischen einen Ausgang der Gleichstromquelle und dem Gleichspannungszwischenkreis üblicherweise noch ein Stromsteller geschaltet. Dieser Stromsteller sorgt für eine Stabilisierung der Spannung im Gleichspannungszwischenkreis und führt dabei häufig eine Spannungserhöhung gegenüber der Spannungshöhe des Ausgangs der Gleichstromquelle durch. Entsprechend wird hier als Stromsteller häufig ein Hochsetzsteller zum Ausführen dieser Spannungsanhebung eingesetzt. Die gesamte Energie bzw. Leistung, die der Wechselrichter aus dem Gleichspannungszwischenkreis in den Wechselstrom am Ausgang umsetzt, muss somit durch den Gleichstromsteller bzw. Hochsetzsteller geleitet werden. Je nach elektrischer Größe der Anlage, also des Wechselrichters und/oder der Stromquelle können mehrere Stromsteller parallel geschaltet werden, um die Leistung aufzuteilen.

Liefert die Stromquelle nur einen Teil der Nennleistung, wie dies bei Solargeneratoren abhängig von der Sonneneinstrahlung regelmäßig der Fall ist, arbeiten die Geräte nicht mehr in ihrem optimalen Arbeitspunkt und die Verluste steigen zumindest relativ zur umgesetzten Leistung. Insbesondere Schaltverlust in dem Stromsteller bzw. den Stromstellern nehmen im Verhältnis zur erzeugten bzw. umgesetzten Leistung einen größeren Anteil an.

Aus der europäischen Offenlegungsschrift EP 0 685 940 A1 ist eine Technologie im Zusammenhang einer Reduzierung der Belastung elektrischer Bauteile, nämlich Kondensatoren beschrieben. Das Dokument EP 0 664 613 A1 betrifft eine Technologie zur Belastungsreduzierung für Schaltermodule. Das Europäische Patent EP 1 266 454, basierend auf der internationalen Anmeldung WO 01/69784A1 beschäftigt sich mit einer statischen Symmetrisierung der Belastung von Leistungshalbleiterschaltern.

Der Erfindung liegt somit die Aufgabe zugrunde, die oben genannten Probleme zu adressieren, insbesondere eine Transformationsanordnung hinsichtlich ihrer Effizienz zu verbessern, vorzugsweise ohne dabei die Lebensdauer betroffener Bauelemente signifikant zu verringern. Insbesondere soll in diesem Sinne eine Stromstelleranordnung verbessert werden. Zumindest soll eine alternative Lösung vorgeschlagen werden.

Erfindungsgemäß wird eine Transformationsvorrichtung zum Transformieren eines Gleichstroms einer Gleichstromquelle mit variierender Ausgangsleistung in einen Wechselstrom gemäß Anspruch 1 vorgeschlagen. Insbesondere betrifft dies eine Gleichstromquelle mit einer vorgesehenen Nennleistung, die üblicherweise auch die maximale oder zumindest bestimmungsgemäße maximal zulässige oder maximal vorgesehene Abgabeleistung dieser Stromquelle bezeichnet und eine übliche Kenngröße ist. Eine Variation der Ausgangsleistung der Stromquelle, also der abgegebenen Leistung der Stromquelle betrifft dann eine Verringerung der abgegebenen Leistung gegenüber der Nennleistung. Die Stromquelle gibt demnach entweder Nennleistung ab oder sie gibt weniger Leistung als Nennleistung ab.

Eine Stromstellervorrichtung ist am Ausgang der Gleichstromquelle angeordnet und transformiert die Gleichspannung am Ausgang der Gleichstromquelle in eine zweite Gleichspannung. Die zweite Gleichspannung wird von einem Wechselrichter in eine Wechselspannung transformiert. Die Stromstellervorrichtung transformiert somit die Gleichspannung am Ausgang der Gleichstromquelle in die zweite Gleichspannung, die somit am Eingang des Wechselrichters und insbesondere im Gleichspannungszwischenkreis des Wechselrichters anliegt. Hierbei soll insbesondere die Spannung im Gleichspannungszwischenkreis auf einem möglichst konstanten Wert gehalten werden, der insbesondere auf den Wechselrichter und die Spannungshöhe der zu erzeugenden Wechselspannung abgestimmt ist. Grundsätzlich kann die Stromstellervorrichtung hierbei die Spannung vom Ausgang der Gleichstromquelle erhöhen und/oder verringern.

Vorzugsweise erfolgt hier ein Erhöhen der Spannung vom Ausgang der Stromquelle zum Eingang des Wechselrichters. In diesem Fall arbeitet die Stromstellervorrichtung als Hochsetzstellervorrichtung. Diese Stromstellervorrichtung bzw. Hochsetzstellervorrichtung hält die zweite Gleichspannung vorzugsweise im Wesentlichen konstant und überträgt hierbei auch Energie, nämlich Strom von der Gleichstromquelle zum Wechselrichter.

Die Stromstellervorrichtung umfasst wenigstens zwei parallel geschaltete Stromsteller, die sämtlichst dazu vorbereitet sind, die erste Gleichspannung in die zweite Gleichspannung zu transformieren, bzw. anders ausgedrückt Strom von der Gleichstromquelle mit einer ersten Gleichspannung zum Wechselrichter mit einer zweiten Gleichspannung zu übertragen.

In Abhängigkeit der abgegebenen Ausgangsleistung der Stromquelle werden alle Stromsteller zugleich betrieben oder es wird abwechselnd jeweils einer oder eine Gruppe der Stromsteller für jeweils eine vorbestimmte Belastungszeit betrieben. Insbesondere werden alle Stromsteller der Stromstellervorrichtung gleichzeitig betrieben, wenn die Stromquelle etwa ihre Nennleistung abgibt. Vorzugsweise wird abwechselnd jeweils nur ein Stromsteller betrieben, wenn die Stromquelle eine erste Teilleistung abgibt, die kleiner als die Nennleistung ist.

Vorzugsweise wird abwechselnd jeweils eine Gruppe von Stromstellern betrieben, wenn die Stromquelle eine zweite Teilleistung abgibt, die kleiner als die Nennleistung und größer als die erste Teilleistung ist. Es ist für den Fachmann selbstverständlich, dass beim wechselseitigen Betreiben jeweils einer Gruppe von Stromstellern entsprechend viele Stromsteller vorhanden sein müssen, um überhaupt mehrere Gruppen von Stromstellern bilden zu können. Im hierfür einfachsten Fall können vier Stromsteller vorgesehen sein, von denen die ersten beiden eine erste und die letzten beiden eine zweite Gruppe bilden. Eine Gruppe kann aber auch gemäß einer Ausführungsform mit anderen Gruppe überlappen, indem beispielsweise bei drei Stromstellern eine erste Gruppe die ersten beiden Stromsteller umfasst, eine zweite Gruppe die letzten beiden und eine dritte Gruppe den ersten und letzten der drei Stromsteller umfasst. Wenn nur zwei Stromsteller vorhanden sind, können entsprechend nicht mehrere Gruppen von Stromstellern gebildet werden.

Somit wird insbesondere vorgeschlagen, für den Fall, wenn die Stromquelle nicht Nennleistung abgibt, also im sogenannten Teillastfall betrieben wird, nicht alle Stromsteller gleichzeitig mit entsprechend reduzierter Leistung zu betreiben, sondern immer nur einen oder einige zurzeit. Dabei sollen sich die Stromsteller bzw. die Gruppen der Stromsteller abwechseln, in dem jeweils ein Stromsteller oder eine Gruppe der Stromsteller für jeweils eine vorbestimmte Belastungszeit betrieben werden. Ist diese vorbestimmte Belastungszeit abgelaufen, wird die Aufgabe von dem nächsten Stromsteller bzw. der nächsten Gruppe der Stromsteller ausgeführt usw, bis wieder der erste Stromsteller bzw. die erste Gruppe der Stromsteller die Aufgabe ausführt. Ob alle Stromsteller der Stromstellervorrichtung zugleich, abwechselnd eine Gruppe der Stromsteller, oder abwechselnd nur jeweils ein Stromsteller betrieben werden, hängt von der jeweils abgegebenen Ausgangsleistung der Stromquelle ab.

Vorzugsweise wird auch die Belastungszeit in Abhängigkeit von der von der Stromquelle abgegebenen Ausgangsleistung eingestellt und/oder sie wird in Abhängigkeit von der Belastung des jeweiligen Stromstellers bzw. der Gruppe von Stromstellern eingestellt. Somit soll erreicht werden, dass der jeweilige Stromsteller bzw. Gruppe von Stromstellern die gesamte zu übertragende Leistung vom Ausgang der Stromquelle zum Wechselrichter überträgt, um dadurch Verluste wie Schaltverluste zu verringern, wobei gleichzeitig zum Verhindern einer zu großen Belastung, insbesondere Überlastung des jeweiligen Stromstellers bzw. der jeweiligen Gruppe der Stromsteller dieser bzw. diese nur kurzzeitig diese Aufgabe erfüllt, nämlich für die Zeitdauer der vorbestimmten Belastungszeit. Ist diese Zeitdauer der vorbestimmten Belastungszeit abgelaufen, wird zum nächsten Stromsteller bzw. zur nächsten Gruppe der Stromsteller umgeschaltet.

Gemäß einer Ausführungsform ist vorgesehen, dass die Belastungszeit kleiner als eine thermische Zeitkonstante des jeweiligen Stromstellers bzw. der Gruppe von Stromstellern eingestellt wird, insbesondere kleiner als eine kleinste thermische Zeitkonstante des jeweiligen Stromstellers, kleiner als eine kleinste thermische Zeitkonstante der Gruppe der Stromsteller und/oder kleiner als eine kleinste thermische Zeitkonstante stromführender Bauteile der Stromstelleranordnung. Die vorbestimmte Belastungszeit, also die jeweilige Zeitdauer in der einer der Stromsteller oder eine Gruppe der Stromsteller betrieben wird, wird somit abhängig einer thermischen Zeitkonstante gewählt, nämlich kleiner als eine thermische Zeitkonstante. Dieser Überlegung liegt die Erkenntnis zugrunde, dass eine Überlastung oder gar Zerstörung eines Stromstellers oftmals thermisch bedingt ist. Insbesondere kann sich eine Zerstörung oder signifikante Verringerung der Lebensdauer eines Stromstellers aus einer thermischen Überlastung ergeben. Jedes Bauteil benötigt aber eine bestimmte Zeit um sich aufzuheizen und entsprechend ist eine thermische Belastung zeitabhängig. Die thermische Zeitkonstante eines Bauteils oder Elementes oder anderer Vorrichtung ist ein Maß für die Zeit, die das betreffende Bauteil, Element oder die entsprechende Vorrichtung zum Aufheizen benötigt.

Es wird somit vorgeschlagen, eine solche thermische Zeitkonstante zu berücksichtigen und den jeweiligen Stromsteller oder die jeweilige Gruppe von Stromstellern entsprechend kürzer zu betreiben. Nachfolgende Erläuterung, die in Bezug auf einen Stromsteller gemacht werden, sind - sofern nichts Gegenteiliges erläutert wird - sinngemäß auch für eine Gruppe von Stromstellern anzuwenden.

Somit wird vorgeschlagen im Teillastbereich die Stromsteller abwechselnd zu betreiben. Somit kann der jeweilige Stromsteller im Betrieb mit hoher, vorzugsweise maximaler Leistung - bezogen auf diesen Stromsteller - betrieben werden, wodurch Schaltverluste gegenüber der Situation vermieden werden, bei der mehrere oder alle Stromsteller der Stromstellervorrichtung zugleich mit reduzierter Leistung betrieben werden. Durch den ständigen Wechsel von einem Stromsteller zum nächsten wird gleichwohl einer Überlastung entgegengewirkt. Durch einen Wechsel nach einer Zeit, die kürzer als die thermische Zeitkonstante ist, werden thermische Überlastungen insoweit vermieden.

Als thermische Zeitkonstante kann vorzugsweise die kleinste thermische Zeitkonstante des jeweiligen Stromstellers zugrunde gelegt werden. Hierdurch wird eine Überlastung aller betroffenen Bauelemente vermieden. Vorzugsweise werden hierbei Zeitkonstanten stromführender Bauteile berücksichtigt, insbesondere die thermische Zeitkonstante eines Halbleiterschalters, einer Leistungsdiode und/oder einer Spule in dem Stromsteller. Die Umschaltzeit orientiert sich somit an den thermischen Zeitkonstanten der im Stromstellerbetrieb belasteten Bauelemente.

Eine thermische Zeitkonstante ist oftmals eine bekannte Kenngröße eines Stromstellers oder seiner Bauelemente. Eine thermische Zeitkonstante eines Stromstellers kann beispielsweise die Zeit sein, die der Stromsteller bei konstanter Belastung benötigt, um beispielsweise 67 % seiner Endtemperatur zu erreichen, bezogen auf die abgekühlte Anfangstemperatur, also die Umgebungstemperatur.

Vorzugsweise übernimmt der Stromsteller die Aufgabe, die Gleichspannung am Ausgang der Gleichstromquelle zu erhöhen, insbesondere wenn die Gleichspannung des Gleichspannungszwischenkreises des Wechselrichters höher ist als die Gleichspannung am Ausgang der Gleichstromquelle. In diesem Fall ist die Stromstellervorrichtung als Hochsetzstellervorrichtung ausgebildet. Vorzugsweise wird als Stromquelle ein Solargenerator verwendet. Ein Solargenerator, der aus einer oder einer Vielzahl von Photovoltaikzellen oder Photovoltaikmodulen aufgebaut sein kann bzw. aufweisen kann, erzeugt elektrische Energie aus Sonnenlicht, so dass seine abgegebene Leistung vom Wetter, Jahreszeit und Tageszeit abhängt. Dieser schwankenden Ausgangsleistung kann durch eine vorgeschlagene Transformationsvorrichtung begegnet werden, die leistungsabhängig Stromsteller wie erläutert betreibt.

Vorzugsweise ist die Transformationsvorrichtung dazu vorbereitet, dass alle Stromsteller der Stromstellervorrichtung gleichzeitig betrieben werden, wenn die Stromquelle etwa ihre Nennleistung abgibt, was auch als Volllastbetrieb bezeichnet werden kann. Wird nur eine erste Teilleistung von der Stromquelle erzeugt und somit abgegeben, wird abwechselnd nur jeweils ein Stromsteller betrieben. Das abwechselnde Betreiben jeweils eines Stromstellers erfolgt somit in einem sogenannten Teillastbetrieb.

Sofern ausreichend viele Stromsteller vorhanden sind, also mindestens drei, vorzugsweise wenigstens vier, so wird abwechselnd jeweils eine Gruppe von Stromstellern betrieben, wenn die Stromquelle eine zweite Teilleistung abgibt. Diese zweite Teilleistung ist größer als die erste Teilleistung und kleiner als die Nennleistung. Es wird somit abwechselnd eine Gruppe von Stromstellern in einem zweiten Teillastbetrieb betrieben.

Die Unterscheidung von zwei unterschiedlichen Teillastbetrieben ist insbesondere - wenn auch nicht ausschließlich - für eine Transformationsvorrichtung vorgesehen, die eine große Anzahl von Stromstellern aufweist, wie beispielsweise 12 Stromsteller. Liefert die Stromquelle Nennleistung, so werden alle 12 Stromsteller - um bei diesem Beispiel zu bleiben - betrieben. Verringert sich die Abgabeleistung beispielsweise auf die Hälfte, können jeweils sechs Stromsteller abwechselnd betrieben werden. Verringert sich die Abgabeleistung weiter, beispielsweise auf ein Drittel der Nennleistung, so können abwechselnd jeweils vier Stromsteller betrieben werden. Entsprechend wären drei Gruppen a vier Stromrichter vorhanden zwischen denen gewechselt wird. Reduziert sich die Leistung weiter, beispielsweise auf ein Viertel der Nennleistung, so können abwechselnd jeweils drei Stromrichter gleichzeitig betrieben werden. Bei einem Sechstel der Nennleistung ist das Betreiben von jeweils zwei Stromrichtern ausreichend. Erst wenn sich die Leistung noch weiter reduziert, insbesondere auf ein Zwölftel der Nennleistung, wird vorgeschlagen nur einen Stromrichter zur Zeit zu betreiben. Hierbei werden die Stromrichter, die jeweils gerade betrieben werden, jeweils gut ausgelastet, ohne dabei überlastet zu werden. Aufgrund des wechselnden Betriebes kann der bzw. können die jeweils betriebenen Stromsteller mit einer höheren Belastung betrieben werden als dies im Dauerbetrieb zulässig wäre. Erzeugt die Stromquelle ein Zehntel der Nennleistung - um bei obigem Beispiel von 12 Stromstellern zu bleiben - wäre ein Dauerbetrieb mit nur einem Stromsteller nicht zulässig, weil ein Stromsteller - eine optimale Dimensionierung und die Verwendung identische Stromsteller angenommen - nur zum Übertragen eines Zwölftels der Nennleistung zulässigerweise zu belasten wäre. Wird er aber nur kurzzeitig betriebe, nämlich kürzer als seine thermische Zeitkonstante, so kann trotz der kurzen hohen Belastung eine thermische Überlastung vermieden werden. Dieser exemplarisch erste Stromsteller kann sich abkühlen, während die übrigen 11 Stromsteller nacheinander betrieben werden.

Erzeugt die Stromquelle zwei Drittel Nennleistung, so kann - um bei obigem Beispiel von 12 Stromstellern zu bleiben - jeweils eine Gruppe von acht Stromstellern betrieben werden, wobei zwischen solchen Gruppen ständig gewechselt wird. Eine erste Gruppe umfasst hierbei beispielsweise den ersten bis achten Stromsteller, eine zweite Gruppe den fünften bis zwölften Stromsteller, und eine dritte Gruppe den neunten bis zwölften und ersten bis vierten Stromsteller. Weil sich jeder Stromsteller in zwei Gruppen befindet und somit entsprechend häufig zum Einsatz kommt, kann es sinnvoll sein, jeweils mehr als acht Stromsteller gleichzeitig zu betreiben oder eine Wechselzeit zu wählen, die deutlich kleiner als die zugrunde gelegte thermische Zeitkonstante ist.

Entsprechend wird vorzugsweise eine Solaranlage vorgeschlagen, die einen Solargenerator zum Erzeugen eines elektrischen Gleichstroms aus Sonnenenergie aufweist, sowie eine Transformationsanordnung gemäß einer der oben beschriebenen Ausführungsformen, wobei der Solargenerator die Gleichstromquelle bildet.

Weiterhin wird ein Verfahren zum Betreiben einer Transformationsvorrichtung vorgeschlagen, das einen Gleichstrom einer Gleichstromquelle mit variierender Ausgangsleistung in einen Wechselstrom transformiert. Die weiteren Schritte des Verfahrens umfassen das Transformieren einer ersten Gleichspannung in eine zweite Gleichspannung mittels einer Stromstelleranordnung, wobei die Stromstelleranordnung wenigstens 2 parallelgeschaltete Stromsteller umfasst und jeder der Stromsteller dazu vorbereitet ist, die erste Gleichspannung in die zweite Gleichspannung zu transformieren, und das Transformieren der zweiten Gleichspannung in eine Wechselspannung mit einem Wechselrichter. In Abhängigkeit der jeweils abgegebenen Ausgangsleistung der Stromquelle werden alle Stromsteller zugleich betrieben oder es wird abwechselnd jeweils ein Stromsteller oder eine Gruppe von Stromstellern für jeweils eine vorbestimmte Belastungszeit betrieben.

Vorzugsweise wird eine Transformationsvorrichtung gemäß einer der oben beschriebenen Ausführungsformen verwendet. Die zu diesen Ausführungsformen gegeben Erläuterungen gelten auch für das vorgeschlagene Verfahren zum Betreiben einer Transformationsvorrichtung.

Somit wird gemäß einer Ausführungsform vorgeschlagen, dass die Belastungszeit in Abhängigkeit von der von der Stromquelle abgegebenen Ausgangsleistung und/oder der Belastung des jeweiligen Stromstellers bzw. der Gruppe von Stromstellern eingestellt wird.

Günstig ist es zudem, wenn alle Stromsteller der Stromstelleranordnung gleichzeitig betrieben werden, wenn die Stromquelle etwa ihre Nennleistung abgibt, dass abwechselnd nur jeweils ein Stromsteller betrieben wird, wenn die Stromquelle eine erste Teilleistung abgibt, die kleiner als die Nennleistung ist, und optional, sofern dazu ausreichend viele Stromsteller vorhanden sind, dass abwechselnd jeweils eine Gruppe von Stromstellern betrieben wird, wenn die Stromquelle eine zweite Teilleistung abgibt, die kleiner als die Nennleistung und größer als die erste Teilleistung ist.

Nachfolgend wird die vorliegende Erfindung exemplarisch anhand einer Ausführungsform unter Bezugnahme auf die begleitende Figur näher beschrieben.

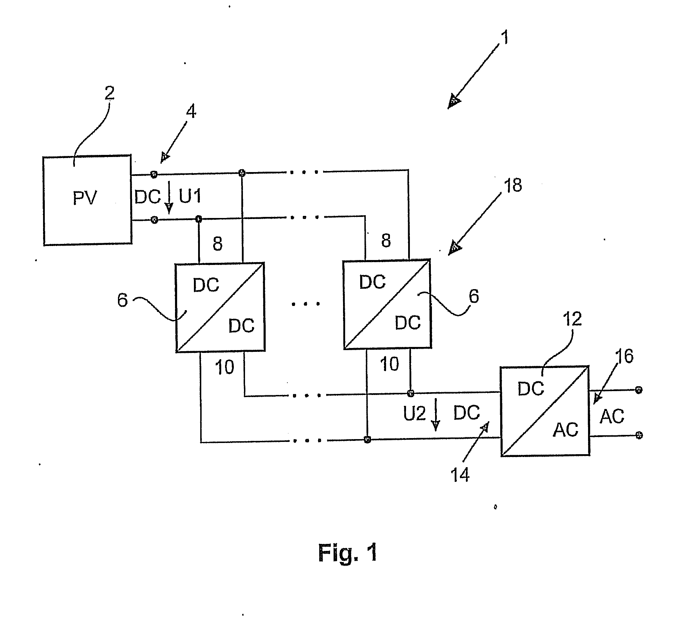

- Figur 1: zeigt eine Transformationsvorrichtung schematisch in einem Blockschaltbild.

Die Transformationsvorrichtung 1 weist eine Gleichstromquelle 2 mit variierender Ausgangsleistung auf. Die Gleichstromquelle 2 ist hier als Solargenerator veranschaulicht, der mit den Buchstaben PV als Kennzeichnung für Photovoltaik versehen ist. Die Gleichstromquelle 2 weist einen Gleichspannungsausgang 4 bzw. Gleichstromausgang 4 auf, der auch als DC-Ausgang bezeichnet werden kann. Der Gleichstromausgang 4 weist eine erste Gleichspannung auf, die auch insbesondere abhängig der jeweils erzeugten Leistung variieren kann.

An dem Gleichstromausgang 4 ist eine Vielzahl von Stromstellern 6 angeschlossen, die eine Stromstellanordnung 18 bilden. Figur 1 zeigt exemplarisch zwei Stromsteller 6 und die drei Punkte zwischen den beiden Stromstellern 6 deuten an, dass hier noch weitere Stromsteller 6 vorgesehen sein können. Die Gleichspannung am Stromausgang 4 liegt somit an jedem Stromeingang 8 der Stromsteller 6 an.

Die Stromsteller 6 wandeln einen Gleichstrom am Stromstellereingang 8 des Stromstellers 6 in einen Gleichstrom und eine Gleichspannung am Stromstellerausgang 10 mit einer bestimmten Spannungsamplitude um.

An den Stromstellern 6, die sämtlichst parallel zueinander geschaltet sind, ist an deren Stromstellerausgängen 8 ein Wechselrichter 12 mit einem Gleichspannungseingang 14 angeschlossen. Die Gleichspannung an den Stromstellerausgängen 10 ist an die Gleichspannung am Gleichspannungseingang 14 des Wechselrichters 12 angepasst. Insbesondere ist diese Gleichspannung an eine Gleichspannung eines Gleichspannungszwischenkreises des Wechselrichters 12 angepasst. Der Gleichspannungszwischenkreis ist der schematischen Darstellung der Figur 1 nicht zu entnehmen, dem Fachmann aber hinlänglich bekannt.

Der Wechselrichter 12 wandelt die Gleichspannung am Gleichspannungseingang 14 in eine Wechselspannung am Wechselrichterausgang 16 um. Der Wechselrichterausgang 16 ist dazu vorgesehen, mit einem elektrischen Versorgungsnetz verbunden zu werden, in das er Wechselstrom einspeist.

Wenn nun die Stromquelle 2, insbesondere bei strahlendem Sonnenlicht im Sommer Nennleistung erzeugt, so werden sämtliche Stromsteller 6 gleichzeitig betrieben, um Strom mit einer ersten Gleichspannung U1 in einen Strom mit einer zweiten Gleichspannung U2 zu wandeln. Wie dargestellt, sind die Stromsteller 6 hierfür zueinander parallel geschaltet. Auch weitere, nur angedeutete Stromsteller wären zu den dargestellten Stromstellern 6 ebenfalls parallel zu schalten.

Wird nun nur eine geringere Leistung als die Nennleistung durch die Gleichstromquelle 2 erzeugt, so befindet sich die Gleichstromquelle 2 und damit die Transformationsvorrichtung 1 insgesamt in einem Teillastbetrieb. Nun wird vorgeschlagen jeweils zu einer Zeit immer nur einen Stromsteller 6 zu betreiben, wobei ständig von einem Stromsteller 6 zum nächsten Stromsteller 6 gewechselt wird. Die Zeit des Wechselns orientiert sich vorzugsweise an einer charakteristischen thermischen Zeitkonstante des Stromstellers 6, insbesondere wird die Wechselzeit kürzer gewählt als eine solche thermische Zeitkonstante. Hierdurch können die Stromsteller 6 optimal betrieben werden und gleichzeitig eine Überlastung vermieden werden. Insbesondere wird im Teillastbetrieb ein Betreiben aller Stromsteller mit damit verbundenen unnötig hohen Schaltverlusten vermieden.

Die vorgeschlagene Lösung kann z. B. beim Betrieb von parallel geschalteten Hochsetzstellern, wie z. B. in einem 15 kW Stringwechselrichter verwendet werden. Wie beschrieben wird ein Verfahren vorgeschlagen, welches unter Ausnutzung der thermischen Zeitkonstanten die Verluste in den parallel betriebenen Stellern optimiert. Das Verfahren beruht darauf, dass von N parallel geschalteten Hochsetzstellern in Zeitschlitzen von T/N jeweils ein Hochsetzsteller im unteren Teillastbereich den kompletten Strom führt. Der Zeitraum T/N soll kleiner als die kleinste thermische Zeitkonstante der stromführenden Bauelemente gewählt werden. Dadurch werden die stromführenden Komponenten im Mittel weniger belastet, bleiben kühler und es werden dadurch weniger Verluste in Summe generiert, als wenn ein Steller den Teillaststrom komplett führen würde. Das Verfahren lässt sich auf Bereiche mit höherer Leistung ausdehnen, indem dann jeweils für 2T/N zwei Hochsetzsteller bzw. für drei T/N drei Hochsetzsteller den Strom führen usw..

In Summe ergibt sich jeweils ein kontinuierlicher und gleichförmiger Summenstrom aus den Strömen der parallel geschalteten Hochsetzsteller.

Im Vergleich zu bekannten PV-Wechselrichtern bei denen meist mehrere Hochsetzsteller getrennt ausgeführt und als separate MPP-Tracker genutzt werden, werden nun parallel geschaltete Steller vorgeschlagen, die getrennt in Zeitschlitzen betrieben werden. Solche waren bisher nicht bekannt und werden nun vorgeschlagen.

## Patentansprüche

1. Transformationsvorrichtung (1) zum Transformieren eines Gleichstroms einer Gleichstromquelle (2) mit variierender Ausgangsleistung in einen Wechselstrom, mit
- einer Stromstelleranordnung (18) zum Transformieren einer ersten Gleichspannung (U1) am Ausgang der Gleichstromquelle (2) in eine zweite Gleichspannung (U2), und
- einem Wechselrichter (12) zum Transformieren der zweiten Gleichspannung (U2) in eine Wechselspannung,
- die Stromstelleranordnung (18) umfasst wenigstens 2 parallelgeschaltete Stromsteller (6), wobei jeder der Stromsteller (6) dazu vorbereitet ist, die erste Gleichspannung (U1) in die zweite Gleichspannung (U2) zu transformieren,
- die Transformationsvorrichtung (1) ist dazu vorbereitet, in Abhängigkeit der jeweils abgegebenen Ausgangsleistung der Stromquelle (2) alle Stromsteller (6) zugleich zu betreiben oder abwechselnd jeweils einen oder eine Gruppe der Stromsteller (6) für jeweils eine vorbestimmte Belastungszeit zu betreiben.

2. Transformationsvorrichtung (1) nach Anspruch 1, **dadurch gekennzeichnet, dass** die Belastungszeit in Abhängigkeit von der von der Stromquelle (2) abgegebenen Ausgangsleistung und/oder der Belastung des jeweiligen Stromstellers (6) bzw. der Gruppe von Stromstellern (6) eingestellt wird.

3. Transformationsvorrichtung (1) nach Anspruch 1 oder 2,
wobei die Belastungszeit kleiner als eine thermische Zeitkonstante des jeweiligen Stromstellers (6) bzw. der Gruppe von Stromstellern (6) eingestellt wird, insbesondere kleiner als eine kleinste thermische Zeitkonstante des jeweiligen Stromstellers (6), kleiner als eine kleinste thermische Zeitkonstante der Gruppe der Stromsteller (6) und/oder kleiner als eine kleinste thermische Zeitkonstante stromführender Bauteile der Stromstelleranordnung (18).

4. Transformationsvorrichtung (1) nach einem der vorstehenden Ansprüche, **dadurch gekennzeichnet, dass** die zweite Gleichspannung (U2) größer als die erste Gleichspannung (U1) ist und dass die Stromstelleranordnung (18) als Hochsetzstelleranordnung und die Stromsteller (6) als Hochsetzsteller ausgebildet sind und/oder dass die Stromquelle (2) als Solargenerator (2) ausgebildet ist.

5. Transformationsvorrichtung (1) nach einem der vorstehenden Ansprüche, dazu vorbereitet,
- dass alle Stromsteller (6) der Stromstelleranordnung (18) gleichzeitig betrieben werden, wenn die Stromquelle (2) etwa ihre Nennleistung abgibt,
- dass abwechselnd nur jeweils ein Stromsteller (6) betrieben wird, wenn die Stromquelle (2) eine erste Teilleistung abgibt, die kleiner als die Nennleistung ist, und optional, sofern dazu ausreichend viele Stromsteller (6) vorhanden sind,
- dass abwechselnd jeweils eine Gruppe von Stromstellern (6) betrieben wird, wenn die Stromquelle eine zweite Teilleistung abgibt, die kleiner als die Nennleistung und größer als die erste Teilleistung ist.

6. Solaranlage umfassend einen Solargenerator (2) zum Erzeugen eines elektrischen Gleichstroms aus Sonnenenergie und eine Transformationsvorrichtung (1) nach einem der vorstehenden Ansprüche, wobei der Solargenerator die Gleichstromquelle (2) bildet.

7. Verfahren zum Betreiben einer Transformationsvorrichtung (1) zum Transformieren eines Gleichstroms einer Gleichstromquelle (2) mit variierender Ausgangsleistung in einen Wechselstrom, umfassend die Schritte
- Transformieren einer ersten Gleichspannung in eine zweite Gleichspannung mittels einer Stromstelleranordnung (18), wobei die Stromstelleranordnung (18) wenigstens 2 parallelgeschaltete Stromsteller (6) umfasst und jeder der Stromsteller (6) dazu vorbereitet ist, die erste Gleichspannung in die zweite Gleichspannung (U2) zu transformieren,
- Transformieren der zweiten Gleichspannung (U2) in eine Wechselspannung mit einem Wechselrichter (12),
- in Abhängigkeit der jeweils abgegebenen Ausgangsleistung der Stromquelle (6) werden alle Stromsteller (6) zugleich betrieben oder es wird abwechselnd jeweils ein Stromsteller oder eine Gruppe von Stromstellern (6) für jeweils eine vorbestimmte Belastungszeit zu betrieben.

8. Verfahren nach Anspruch 7, wobei eine Transformationsvorrichtung (1) nach einem der Ansprüche 1 bis 5 verwendet wird.

9. Verfahren nach Anspruch 7 oder 8, **dadurch gekennzeichnet, dass** die Belastungszeit in Abhängigkeit von der von der Stromquelle (2) abgegebenen Ausgangsleistung und/oder der Belastung des jeweiligen Stromstellers (6) bzw. der Gruppe von Stromstellern (6) eingestellt wird.

10. Verfahren nach einem der Ansprüche 7 bis 9, **dadurch gekennzeichnet,**
- **dass** alle Stromsteller (6) der Stromstelleranordnung (18) gleichzeitig betrieben werden, wenn die Stromquelle (2) etwa ihre Nennleistung abgibt,
- **dass** abwechselnd nur jeweils ein Stromsteller (6) betrieben wird, wenn die Stromquelle (2) eine erste Teilleistung abgibt, die kleiner als die Nennleistung ist, und optional, sofern dazu ausreichend viele Stromsteller vorhanden sind,
- **dass** abwechselnd jeweils eine Gruppe von Stromstellern (6) betrieben wird, wenn die Stromquelle (2) eine zweite Teilleistung abgibt, die kleiner als die Nennleistung und größer als die erste Teilleistung ist.
